# EUROPEAN PATENT APPLICATION

(11) **EP 0 613 129 A1**
(43) Date of publication of application: **31.08.1994**
(21) Application number: 94420056.7
(22) Date of filing: 17.02.1994
(51) Int. Cl.: G11B 7/24

(54) **High stability gold based alloy reflectors for use in a writable compact disk**

(30) Priority: 26.02.1993 US 23309
(71) Applicant: EASTMAN KODAK COMPANY, Rochester, New York 14650-2201 (US)
(72) Inventor: Vazan, Fridrich, c/o EASTMAN KODAK COMPANY, Rochester, New York 14650-2201 (US); Tyan, Yuan-Sheng, c/o EASTMAN KODAK COMPANY, Rochester, New York 14650-2201 (US); Hatwar, Tukaram Kisan, c/o EASTMAN KODAK COMPANY, Rochester, New York 14650-2201 (US); Barge, Timothy Steven, c/o EASTMAN KODAK COMPANY, Rochester, New York 14650-2201 (US)
(74) Representative: Parent, Yves

(57) **Abstract**

A writable compact disk has a plastic substrate (14), a recording layer (13), a reflecting layer (12), and a protective overcoat (11). The reflecting layer is comprised of gold alloyed with a metal selected from at least one of group of palladium, platinum, copper, nickel and silver. The non-gold constituent ranges from 1 to 30 at.% of the alloy. The added metal constituent provides a reduced jitter parameter of retrieved information when the write power exceeds the optimum recording layer value. The reduced jitter parameter is a result of improved adhesion of the recording layer to the reflecting layer and in improved mechanical properties of the reflecting layer.

## Description

### BACKGROUND OF THE INVENTION

### 1. Field of Invention

This invention relates generally to compact disks and, more particularly, to the reflecting layer typically found on writable compact disks.

### 2. Description of the Related Art

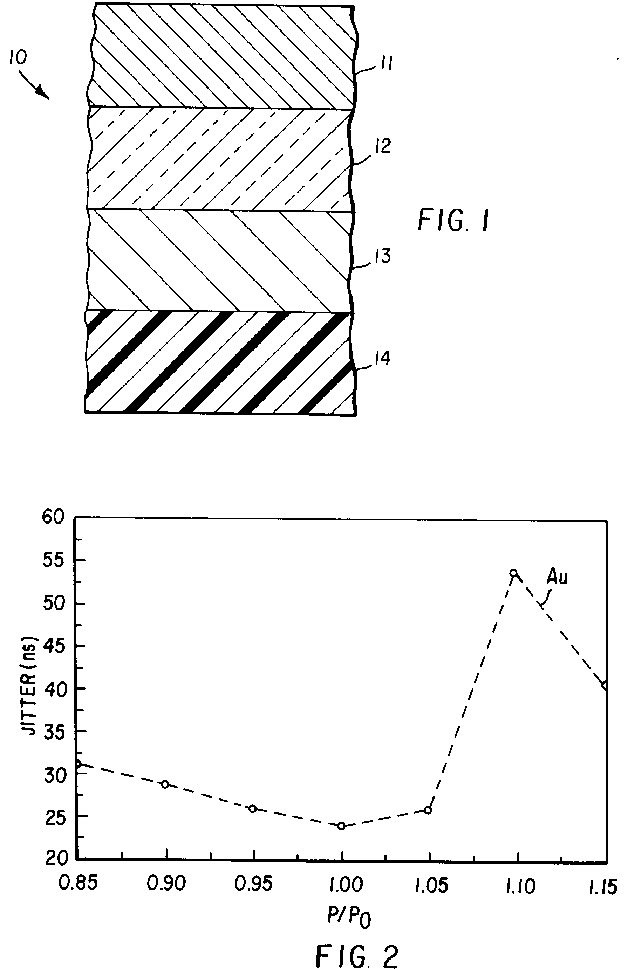

Writable compact disks, i.e., compact disks upon which information can be written after the manufacture thereof, have been previously described in the related art. The information can be stored in the form of regions having optical properties determined by applied radiation. The information is retrieved by illuminating the regions and identifying differences in the radiation which has interacted with the disks. The Photo CD is an example of this type of storage medium. As illustrated in Fig. 1, a writable compact disk has a pre-grooved plastic substrate 14, a recording layer 13, a (metal) reflector layer 12, and a protective (lacquer) overcoat 11. The conventional writable storage medium uses a thin layer of gold as the reflecting layer. The gold reflecting layer exhibits both high stability and high reflectivity. However, gold is expensive and has several undesirable features when used as a reflecting material in a storage medium. By way of specific example, the gold reflecting layer is typically fabricated by a sputtering deposition process in order to achieve high product throughput. During higher power writing processes, such as when information is being stored at greater than the normal reading speed and the laser power must be correspondingly increased, the gold layer deforms and delaminates which results in cracks that are produced in the dye layer. (The higher power levels are used to expedite the writing period normally used to record information at the typical disk speed.) As a result of these phenomena, increased noise is produced in adjacent information tracks. In addition, the gold reflecting layer exhibits enhanced noise at power levels typically used to record at speeds which are greater than the normal reading speeds. This phenomenon is referred to as Noise at Optimum Recording Power (NORP) and is a serious problem in writable media using dyes.

A need has therefore been felt for a reflecting layer in writable compact disk media which has high reflectivity and long term durability and in which the noise is reduced.

### SUMMARY OF THE INVENTION

It is an object of the present invention to provide an improved optical storage medium.

It is a feature of the present invention to provide an improved reflecting layer in a writable optical storage medium.

It is a more particular feature of the present invention to provide a reflecting layer in a writable optical storage medium comprised of gold alloys with small amounts of at least one of the metals such as palladium, platinum, copper, nickel and silver.

The present invention is directed to overcoming one or more of the problems set forth above. Briefly summarized, according to one aspect of the present invention, reflecting layers in a writable optical storage medium comprised of alloys of gold with at least one of the metals selected from palladium, copper, platinum, nickel and silver in the amounts of 1 to 30 at.% have been found to exhibit properties resulting in the reduction of the noise at high recording powers.

The reflecting layer is fabricated with the alloys of gold and at least one metal elected from the group comprising palladium, platinum, copper, nickel and silver advantageously reduces the noise that has in the past been present in the retrieval of information written on the storage media. These alloys permit a wider range of recording powers to be used as well as providing improved durability and adhesion along with reduced cost.

These and other aspects, objects, features and advantages of the present invention will be more clearly understood and appreciated from a review of the following detailed description of the preferred embodiments and appended claims, and be reference to the accompanying drawings.

### BRIEF DESCRIPTION OF THE DRAWINGS

Figure 1 is a cross-sectional view of the writable optical storage medium such as a writable compact disk.

Figure 2 is a graph of jitter parameter of the information retrieved from recording layer of an optical storage disc as function of write power for a gold reflecting layer.

Figure 3 is a graph of a jitter parameter of the information retrieved from the recording layer of an optical storage disk as a function of write power for several concentrations of silver in a gold-silver alloy reflecting layer.

Figure 4 is a graph of a jitter parameter of the information retrieved from the recording layer of an optical storage disk as a function of write power for several concentrations of palladium in a gold-palladium alloy reflecting layer.

Figure 5 is a graph of a jitter parameter of the information retrieved from the recording layer of an optical storage disk as a function of the write power for a gold-platinum alloy reflecting layer.

Figure 6 is a graph of a jitter parameter of the information retrieved from the recording layer of an optical storage disk as a function of the write power for a gold-copper alloy reflecting layer.

Figure 7 is a graph of a jitter parameter of the information retrieved from the recording layer of an optical storage disk as a function of the write power for a gold-nickel alloy reflecting layer.

Figure 8 is a graph of a jitter parameter of the information retrieved from the recording layer of an optical storage disk as a function of the write power for a gold-palladium-silver alloy reflecting layer.

### DESCRIPTION OF THE PREFERRED EMBODIMENTS

### 1. Detailed Description of the Figures

Fig. 1 has been described above as an example of the structure of a typical writable optical storage medium such as a writable compact disk. In the present invention, the reflecting layer is fabricated from alloys of gold and at least one of the metals from the group of palladium, platinum, copper, nickel and silver.

### Example 1:

A writable compact disk consisting of a grooved polycarbonate substrate 14 and an organic dye recording layer 13 was overcoated with a reflecting layer 12 of gold with a thickness of 80-85 nm. The gold layer was prepared by a sputtering process using a Model-B315 planar magnetron sputtering source purchased from Ion Tech Ltd. The deposition was carried out in the presence of 3 mTorr pressure of argon and using 50 Watts of sputtering power. The gold reflecting layer 12 was then spin coated with an organic protective layer 11. Using a standardized testing procedure, the dynamic disk performance was measured and a jitter parameter was measured as a function of recording power. Referring to Fig. 2, a distinctive increase in the jitter parameter is observed at a recording power P/P₀=1.1, where P₀ is the optimum recording power.

### Example 2:

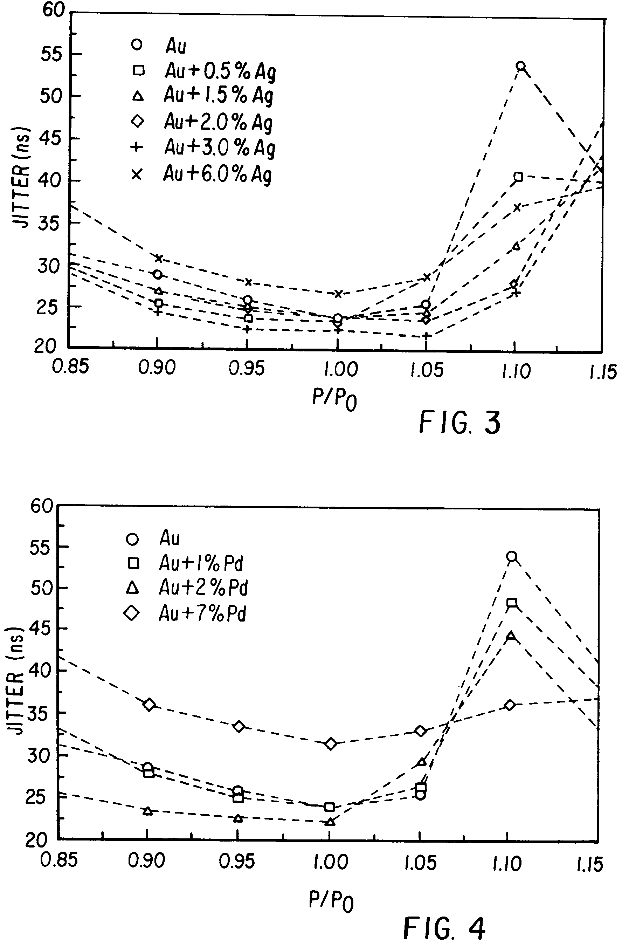

Using the same deposition conditions described in Example 1, a grooved polycarbonate substrate 14 and an organic dye recording layer 13 was overcoated with a reflecting layer 12 of gold and a 0.7 to 5.0 at.% silver mixture having a thickness of 80 to 85 nm. The gold and silver components were cosputtered using Model-B315 sputtering sources. The concentration of the gold and silver components in the reflecting layer 12 was controlled by adjusting the sputtering power. The reflecting layer 12 was then spin coated with a protective layer 11 and the disk was dynamically evaluated for performance with recorded information. Referring to Fig. 3, the jitter parameter dependence as a function of recording power for several silver concentrations is shown. The increase in the jitter parameter in the vicinity of the P/P₀=1.1 is substantially reduced in the presence of silver.

### Example 3:

Using the same deposition conditions described in Example 2, a grooved polycarbonate substrate 14 and an organic dye recording layer 13 was overcoated with a reflective layer 12 of the gold and a 1 to 7 at.% mixture of palladium. The reflecting layer 12 was then spin coated with an organic protective overcoat 11. The disk was then dynamically evaluated under the standard conditions. Referring to Fig. 4, the jitter parameter is plotted as a function of power for several concentrations of palladium. The jitter parameter increase in the vicinity of the P/P₀=1.1 recording power as compared to the increase for the gold reflecting layer is substantially reduced.

### Example 4:

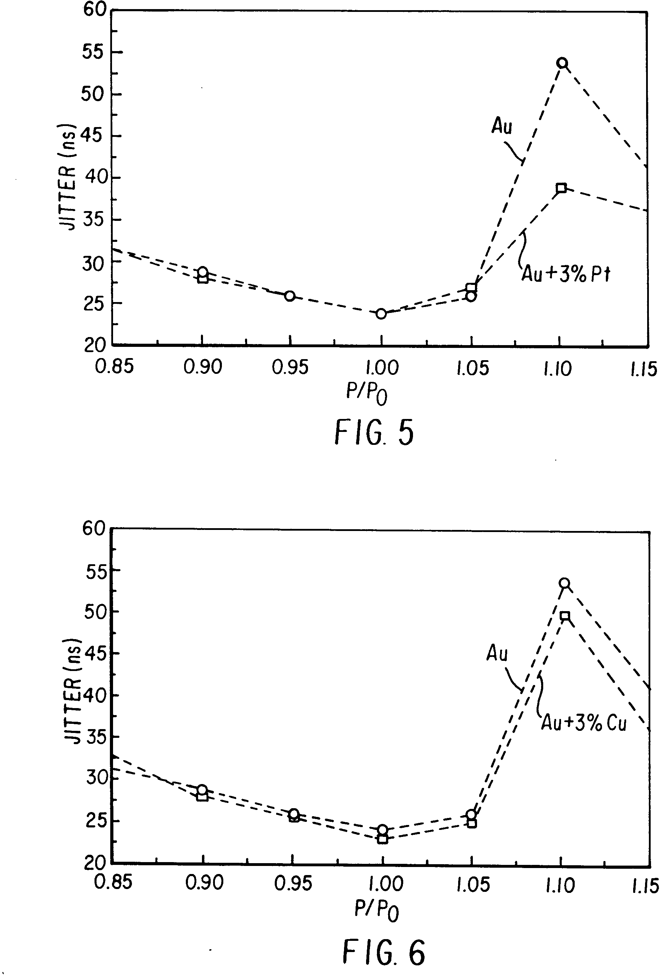

Using the same deposition conditions described in Example 2, a grooved polycarbonate substrate 14 and an organic dye recording layer 13 was overcoated with a reflective layer 12 of the gold and a 2 at.% mixture of platinum. The reflecting layer 12 was then spin coated with an organic protective overcoat 11. The disk was then dynamically evaluated under the standard conditions. Referring to Fig. 5, the jitter parameter increase in the vicinity of the P/P₀=1.1 recording power is substantially reduced in comparison to the jitter parameter of the gold reflecting layer in the same recording power range.

### Example 5:

Using the same deposition conditions described in Example 2, a grooved polycarbonate substrate 14 and an organic dye recording layer 13 was overcoated with a reflective layer 12 of the gold and a 3 at.% mixture of copper. The reflecting layer 12 was then spin coated with an organic protective overcoat 11. The disk was then dynamically evaluated under standard conditions. Referring to Fig. 6, the dependence of the jitter parameter as a function of recording power in the vicinity of P/P₀=1.1 recording power shows a substantially lower jitter parameter increase.

### Example 6:

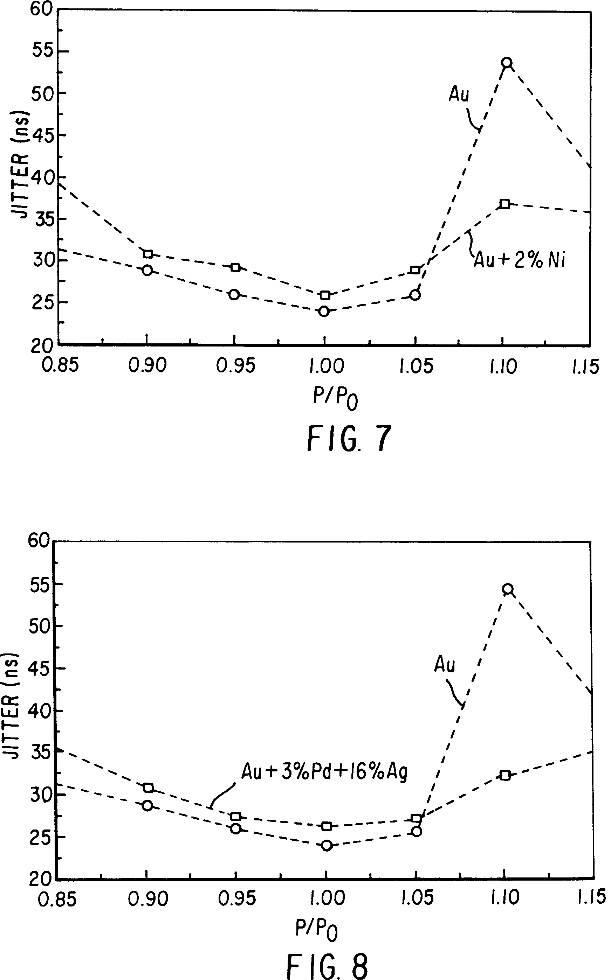

Using the same deposition conditions described in Example 2, a grooved polycarbonate substrate 14 and an organic dye recording layer 13 was overcoated with a reflective layer of the gold and a 2 at.% mixture of nickel. The reflecting layer 12 was then spin coated with an organic protective overcoat 11. The disk was then dynamically evaluated under the standard conditions. Referring to Fig. 7, the increase in the jitter parameter in the vicinity of P/P₀=1.1 recording power is substantially reduced as compared with the increase for the gold reflecting layer.

### Example 7:

Using the same deposition conditions described in Example 2, a grooved polycarbonate substrate 14 and an organic dye recording layer 13 was overcoated with a reflective layer of the gold, 2 at.% of palladium, and a 16 at.% silver mixture. The reflecting layer 12 was then spin coated with an organic protective overcoat 11. The disk was then dynamically evaluated under standard conditions. Referring to Fig. 8, the increase in the jitter parameter in the vicinity of the P/P₀=1.1 is substantially reduced compared to the gold reflecting layer.

### 2. Operation of the Preferred Embodiment

It will be now appreciated that the use of gold-palladium, gold-platinum, gold-copper, gold-nickel, and gold-silver alloys along with gold alloys having two or more additional components as the reflecting layer in writable optical storage media, including the writable CD disk, results in significantly lower jitter parameters along with other advantages. The jitter parameter is a measure of the deviation of the distance between boundaries of, for example, information bearing regions in the storage recording layer. The best results are found when the amount of metal added to the gold is less than 30 at.%. Part of the limit in the amount of metal added to the gold arises because of the changes in reflectivity.

Operation of the present invention is believed to be apparent from the foregoing description and drawings, but a few words will be added for emphasis. The advantages of the gold-metal alloys for the reflecting layer for writable compacts disks of the present invention as compared to reflecting layers of the related art include the relative stability when higher than illumination power is employed to write on the recording layer while maintaining the reflectivity of the recording layer of the related art.

While the invention has been described with reference to the writable compact disk, it is apparent that the invention is easily adapted to other devices that have an optical recording layer in contact with a reflecting layer.

While the invention has been described with particular reference to a preferred embodiment, it will be understood by those skilled in the art that various changes may be made and equivalents may be substituted for elements of the preferred embodiment without departing from invention. By way of illustration, the examples described above make reference to a recording layer of an organic dye material. The recording layer could also be an organo-metallic compound or any other material with suitable optical and mechanical properties to be incorporated in a writable storage medium. In addition, many modifications may be made to adapt a particular situation and material to a teaching of the invention without departing from the essential teachings of the present invention.

As is evident from the foregoing description, certain aspects of the invention are not limited to the particular details of the examples illustrated, and it is therefore contemplated that other modifications and applications will occur to those skilled in the art. It is accordingly intended that the claims shall cover all such modifications and applications as do not depart from the true spirit and scope of the invention.

The invention is summarized as follows :
1. A writable compact disk capable of having information written thereon by a radiation beam, said writable compact disk comprising:
   a radiation transmitting substrate;
   a recording layer deposited on said substrate;
   a reflecting layer deposited on said recording layer, wherein said reflecting layer is gold alloyed with a metal constituent, said metal constituent providing improved adhesion between said recording layer and said reflecting layer; and
   a protective overcoat deposited on said reflecting layer.
2. The writable compact disk of 1 wherein said at least one metal is selected from the group consisting of palladium, platinum, copper, nickel, and silver.
3. The writable compact disk of 1 wherein said metal constituent in said alloy is less than 30 at.% of said alloy.
4. The writable compact disk of 2 wherein said alloy further includes a plurality of said metal constituents.
5. The writable compact disk of 2 wherein said recording layer is comprised of a photo-sensitive organic dye.
6. The writable compact disk of 5 wherein said substrate is comprised of a polycarbonate material.
7. The writable compact disk of 2 wherein said recording layer is an organo-metallic compound.
8. A writable compact disk capable of having information written thereon by a radiation beam, said writable compact disk comprising:
   a plastic substrate;
   a recording layer deposited on said substrate;
   a reflecting layer deposited on said recording layer, said recording layer being a gold-metal alloy; and
   a protective overcoat deposited on said reflecting layer.
9. The writable compact disk of 8 wherein non-gold constituents in said alloy are selected from the group consisting of palladium, platinum, copper, nickel and silver.
10. The writable compact disk of 9 wherein said metal component of said alloy is less than 30 at.% of said alloy.
11. The writable compact disk of 10 wherein said gold-metal alloy further a plurality of said metal components.
12. The writable compact disk of 11 wherein a recording layer is a photo-sensitive organic dye material.
13. The writable compact disk of 12 wherein said substrate layer is comprised of a polycarbonate material.
14. In a writable optical storage medium in which an optical recording layer is proximate a reflecting layer, the method of improving the jitter and the NORP parameters when said recording layer is irradiated with a radiation intensity greater than a normal operating intensity while maintaining an acceptable reflectivity from said reflecting layer, said method comprising the step of:
   depositing a reflecting layer of a gold-metal alloy on said recording layer, wherein a metal constituent of said alloy is selected from a group consisting of palladium, platinum, copper, nickel and silver.
15. The method of 14 wherein said depositing step includes a step of limiting a metal content of said alloy to be less than 30 at.%.
16. The method of 15 wherein said depositing step includes a step of including at least two metal components in said alloy.
17. The method of 16 further including the step of positioning said recording layer proximate a substrate of polycarbonate.
18. A writable optical storage medium for storing information in regions having optical properties determined by application of a radiation beam, said information retrieved from said medium through interaction of said regions with a radiation beam, said writable storage medium comprising:
   a substrate capable of transmitting a radiation beam having a selected wavelength;
   a recording layer of material proximate said substrate, said recording layer capable of interacting with said radiation beam;
   a reflecting layer deposited on said recording layer, said reflecting layer including a gold-metal alloy; and
   a protective layer proximate said reflecting layer.
19. The writable optical storage medium of 18 wherein said metal in said alloy is selected from a group comprising palladium, platinum, copper, nickel and silver.
20. The writable optical storage medium of 18 wherein said writable storage medium is compact disk capable of having information written thereon after disk fabrication.
21. The writable optical storage medium of 19 wherein said gold-metal alloy further includes at least two metal components.
22. The writable optical storage medium of 19 wherein a metal content of said alloy is less than 30 at.% of the alloy.

## Claims

1. A writable compact disk capable of having information written thereon by a radiation beam, said writable compact disk comprising:
a radiation transmitting substrate;
a recording layer deposited on said substrate;
a reflecting layer deposited on said recording layer, wherein said reflecting layer is gold alloyed with a metal constituent, said metal constituent providing improved adhesion between said recording layer and said reflecting layer; and
a protective overcoat deposited on said reflecting layer.

2. The writable compact disk of claim 1 wherein said alloy further includes a plurality of said metal constituents.

3. The writable compact disk of claim 1 wherein said recording layer is comprised of a photosensitive organic dye.

4. The writable compact disk of claim 1 wherein said substrate is comprised of a polycarbonate material.

5. A writable compact disk capable of having information written thereon by a radiation beam, said writable compact disk comprising:
a plastic substrate;
a recording layer deposited on said substrate;
a reflecting layer deposited on said recording layer, said recording layer being a gold-metal alloy; and
a protective overcoat deposited on said reflecting layer.

6. The writable compact disk of claim 5 wherein said gold-metal alloy further a plurality of said metal components.

7. In a writable optical storage medium in which an optical recording layer is proximate a reflecting layer, the method of improving the jitter and the NORP parameters when said recording layer is irradiated with a radiation intensity greater than a normal operating intensity while maintaining an acceptable reflectivity from said reflecting layer, said method comprising the step of:
depositing a reflecting layer of a gold-metal alloy on said recording layer, wherein a metal constituent of said alloy is selected from a group consisting of palladium, platinum, copper, nickel and silver,

8. The method of claim 7 wherein said depositing step includes a step of including at least two metal components in said alloy.

9. A writable optical storage medium for storing information in regions having optical properties determined by application of a radiation beam, said information retrieved from said medium through interaction of said regions with a radiation beam, said writable storage medium comprising:
a substrate capable of transmitting a radiation beam having a selected wavelength;
a recording layer of material proximate said substrate, said recording layer capable of interacting with said radiation beam;
a reflecting layer deposited on said recording layer, said reflecting layer including a gold-metal alloy; and
a protective layer proximate said reflecting layer.

10. The writable optical storage medium of claim 9 wherein said metal in said alloy is selected from a group comprising palladium, platinum, copper, nickel and silver.
